# EUROPEAN PATENT APPLICATION

(11) **EP 4 617 858 A1**
(43) Date of publication of application: **17.09.2025**
(21) Application number: 24162841.1
(22) Date of filing: 12.03.2024
(51) Int. Cl.: G06F 9/30

(54) **SYSTEM AND METHOD FOR MANAGING MULTIPLE REGISTER SEMANTIC MODES**

(71) Applicant: Huawei Technologies Co., Ltd., Shenzhen, Guangdong 518129 (CN)
(72) Inventor: Bartolini, Davide Basilio, 80992 Munich (DE); Stramondo, Giulio, 80992 Munich (DE)
(74) Representative: Körber, Martin Hans

(57) **Abstract**

The present disclosure provides a data processing system (100) and a method (200) carried out by the data processing system. The data processing system comprises a plurality of registers (102), wherein each register (RI, R2, up to Rn), has one or more storage locations organised according to one of a plurality of semantic modes, including a first semantic mode and a second semantic mode; and a control interface (104) configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode.

## Description

### TECHNICAL FIELD

The present disclosure relates generally to the field of computer architecture and more specifically, to a computer system or data processing system and a method carried out by the computer system or data processing system.

### BACKGROUND

Generally, computer systems consist of various components including memory and processors, wherein the memory is operable to store information, while the processor is operable to retrieve, process, and store data.

Conventionally, in typical instruction-set architectures (ISAs), general-purpose architectural registers primarily serve two purposes, namely, connecting instructions that produce a value (i.e., a write operation to a given register) with instructions that use a value (i.e., a read operation from a given register) and temporary storage for the said values. Instructions typically contain fields for opcodes (identifying the instruction), register identifiers (specifying operands and results), and sometimes, constant values. The number of register identifiers are limited by the number of bits allocated in each instruction. For example, a 5-bit register identifier field limits the architecture to 32 registers and expanding the said field would break compatibility with older software(s), requiring complex workarounds and additional efforts.

Typically, instructions that read from a given register receive the value that was last written to it, according to program order i.e., writing to a register is a destructive operation that replaces the previously stored value. Such a behaviour determines write-after-write (WAW) dependencies on register names and the number of registers available in an ISA defines how many temporary values a program can hold concurrently before having to redefine (i.e., overwrite) one or more of the registers. However, due to encoding limitations, only a few registers are usually available; for example, x86 and AArch64 processor architectures define 16 and 31 integer general-purpose registers, respectively. Such a limited availability of registers leads to increased register pressure, which in turn forces compilers to redefine registers frequently, thereby potentially spilling long-lived values to the slower main memory.

In order to resolve WAW dependencies that would otherwise limit instruction-level parallelism (ILP), out-of-order processors perform register renaming and map architectural registers to a larger pool of physical registers. However, while register renaming resolves WAW dependencies that would otherwise limit instruction level parallelism (ILP), out of order processors perform register renaming and map architectural registers to a larger pool of physical registers. The small number of available register names still limit the scope of optimizations such as unrolling, pipelining, and hoisting, since dependent instructions cannot be placed too far apart without having to spill values to the main memory, resulting in additional overhead in the form of additional loading (or load) and/or storage (or store) instructions.

Therefore, in light of the foregoing discussion, there exists a need to overcome the aforementioned drawbacks associated with the conventional methods and systems to provide an efficient, dynamic and optimized data processing system and a method carried out by the data processing system.

### SUMMARY

The present disclosure provides a data processing system and a method carried out by the data processing system. The present disclosure addresses the problem(s) of the limited number of available architectural registers in conventional instruction set architectures (ISAs), which limits the effectiveness of software optimizations, by allowing usage of registers defined in one or multiple extended semantic modes (e.g., a queue behaviour, or a stack behaviour) without requiring specific management instructions.

One or more objectives of the present disclosure are achieved by the solutions provided in the enclosed independent claims. Advantageous implementations of the present disclosure are further defined in the dependent claims.

In one aspect, the present disclosure provides a data processing system comprising:
a plurality of registers, wherein each register has one or more storage locations organised according to one of a plurality of semantic modes, including a first semantic mode and a second semantic mode; and
a control interface configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode.

Advantageously, the data processing system addresses the problem(s) of the limited number of available architectural registers in conventional instruction set architectures (ISAs), which limits the effectiveness of software optimizations by allowing usage of at least one of the plurality of registers defined in an extended semantic mode (e.g., a queue behaviour, or a stack behaviour) without requiring specific management instructions. The data processing system enables explicit management of queue (or stack) registers without requiring additional management instructions, which are conventionally required to be encoded in the ISA and thereby added to the assembly code. The data processing system removes the need for such management instructions to reduce overhead and improves the benefits of the new register semantics. Moreover, the data processing system enables exposing additional instruction-level parallelism via simple extension(s) to the existing abstraction of the plurality of registers and also allows for additional parallelism to improve the performance of the data processing system by better hiding latency.

Further, the data processing system overcomes the problem of memory latency by hiding producer latency, and leveraging the queueing mechanism for producer-consumer separation supporting software pipelining and load packing for increased memory level parallelism (MLP). Furthermore, the data processing system reduces branch resolution time by hoisting branch condition precomputation (similar to Conditional Flow Prediction (CFD) but with lower overhead), and simultaneously reduces redundant computations by utilizing the extended semantic mode to avoid address re-computations. Such an implementation allows the data processing system to hide the time spent evaluating the branch condition(s), thereby increasing rate of program execution by directing immediate correction of the instruction path. Overall, the data processing system demonstrates a multifaceted approach to optimizing performance and efficiency by addressing key limitations such as, but not limited to, memory latency, branch resolution time, and redundant computations, resulting in faster processing and higher throughput.

In an implementation form, the first semantic mode is a queue based semantic mode where a write instruction destined for the corresponding register of the plurality of registers is interpreted as an enqueue operation which pushes data to a tail of a queue, and a read instruction destined for the corresponding register is interpreted as a dequeue operation to retrieve data from a head of a queue. Such an implementation of the first semantic mode enables accurate and ordered data retrieval, and simultaneously streamlines data processing tasks in order to improve the efficiency of the data processing system.

In another implementation form, the first semantic mode is a stack based semantic mode where a write instruction destined for the corresponding register of the plurality of registers is interpreted as a push operation which pushes data to a top position of a stack and a read instruction destined for the corresponding register is interpreted as a pop operation which retrieves data from the top position of a stack. Such an implementation of the first semantic mode enables simplified access to the latest data without requiring management of the entire data history within the corresponding register of the plurality of registers.

In another implementation form, a write instruction destined for the corresponding register of the plurality of registers is interpreted as a destructive write operation which replaces existing data with new data, according to the second semantic mode. Such an implementation of the plurality of semantic modes via the data processing system potentially offloads processing overhead from associated software(s) and thereby improves the performance thereof.

In another implementation form, the plurality of registers comprises at least one of integer registers, floating point registers and/or vector registers. The data processing system of the present disclosure can be implemented with various types of registers to offer versatility and flexibility.

In another implementation form, the extended semantic mode functionality is defined in an Instruction Set Architecture of a processing unit of the data processing system, and wherein the control interface is configured to selectively enable or disable an extended semantic mode functionality according to the Instruction Set Architecture. The definition of the extended semantic modes within the ISA ensures consistency and compatibility such that programs written for the ISA can leverage the semantic modes to potentially simplify code development and facilitate code sharing across different systems adhering to the same ISA.

In another implementation form, the control interface is implemented by a memory mapped control register. Such an implementation simplifies the communication between the data processing system and the control interface, and simultaneously enables dynamic modification of the extended semantic mode functionality of each of the plurality of registers.

In another aspect, the present disclosure provides a method carried out by a data processing system which comprises:
a plurality of registers, where each register has multiple storage locations organised according to one of a plurality of semantic modes, including a first semantic mode and a second semantic mode; and
a control interface configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode;
the method comprising steps of:
enabling, by the control interface, the extended semantic mode functionality for a register of the plurality of registers; and
interpreting a received write and/or read instruction according to the first semantic mode.

The method achieves all the advantages and technical effects of the data processing system of the present disclosure.

In yet another aspect, the present disclosure provides a computer program comprising instructions for carrying out all the steps of the method carried out by the data processing system, when said computer program is executed on a computer system.

The computer program achieves all the advantages and technical effects of the method of the present disclosure.

In an implementation form, the computer program is stored on a computer readable storage medium.

It is to be appreciated that all the aforementioned implementation forms can be combined.

It has to be noted that all devices, elements, circuitry, units, and means described in the present application could be implemented in the software or hardware elements or any kind of combination thereof. All steps that are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity that performs that specific step or functionality, it should be clear for a skilled person that these methods and functionalities can be implemented in respective software or hardware elements or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, elements have been indicated by identical numbers.

Embodiments of the present disclosure will now be described, by way of example only, concerning the following diagrams wherein:
FIG. 1 illustrates a block diagram of a data processing system, in accordance with one or more embodiments of the present disclosure;
FIG. 2 illustrates a flowchart listing steps involved in a method carried out by the data processing system of FIG. 1, in accordance with one or more embodiments of the present disclosure;
FIGs. 3A and 3B (PRIOR ART) illustrate an exemplary graphical depiction of value stored in a conventional register as a sequence of six instructions is executed;
FIGs. 4A and 4B (PRIOR ART) illustrate an exemplary graphical depiction of the values stored in another conventional register as a sequence of six instructions is executed;
FIGs. 5A and 5B illustrate an exemplary depiction of value stored in a register of the plurality of registers as each instruction of a sequence of five instructions that interact with the register is executed, in accordance with one or more embodiments of the present disclosure; and
FIG 6 illustrates an exemplary depiction of the extended semantic mode being implemented on a register of the plurality of registers, in accordance with one or more embodiments of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

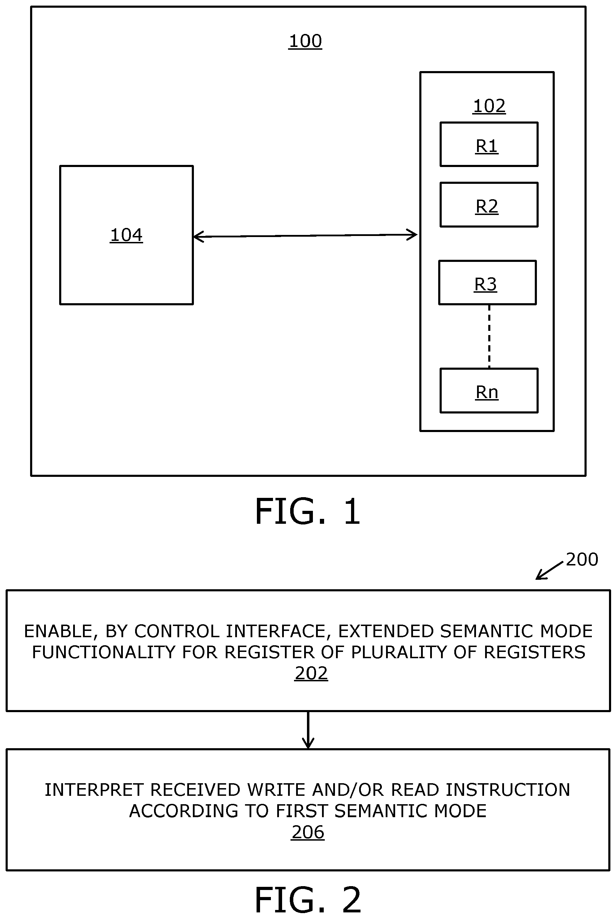

FIG. 1 illustrates a block diagram of a data processing system **100**, in accordance with one or more embodiments of the present disclosure. As shown, the data processing system **100** comprises a plurality of registers **102**, wherein each register, **R1**, **R2**, up to **Rn**, of the plurality of registers **102** has one or more storage locations organised according to one of a plurality of semantic modes, including a first semantic mode and a second semantic mode.

Throughout the present disclosure, the term "*data processing system*" as used herein refers to a structure and/or module that includes programmable and/or non-programmable components configured to store, process and/or share information, data, instructions and/or signals. Optionally, the data processing system **100** (or simply referred to as, a processing system) includes any arrangement of physical or virtual computational entities capable of enhancing information to perform various computational tasks. For example, the data processing system **100** may include a control interface, an arithmetic logic unit (ALU), a main memory, and the plurality of registers **102.** Further, it will be appreciated that the data processing system **100** may be implemented as a hardware processor and/or plurality of hardware processors operating in a parallel or in a distributed architecture. Optionally, the processing system **100** includes, but is not limited to, a microprocessor, a micro-controller, a complex instruction set computing (CISC) microprocessor, a reduced instruction set (RISC) microprocessor, a very long instruction word (VLIW) microprocessor, Field Programmable Gate Array (FPGA), advanced RISC Machine (ARM) processor, Decoupled Access-Execute (DAE) Processor, or any other type of processing circuit, for example as aforementioned. In the present examples, the processing system **100** may include components such as memory, processor(s), a network adapter and the like, to store, process and/or share information with other computing components, such as, a user interface, a user device, a remote server unit, a database arrangement, and the like. Optionally, the data processing system **100** is supplemented with additional computation system, such as neural networks, and hierarchical clusters of pseudo-analog variable state machines implementing artificial intelligence algorithms. Optionally, the data processing system **100** is implemented as a computer program that provides various services (such as database service) to other devices, modules or apparatus. The data processing system **100** may be arranged in various architectures for responding to and processing the instructions for any intended operation.

Notably, the data processing system **100** addresses the problem(s) of the limited number of available architectural registers in conventional instruction set architectures (ISAs), which limits the effectiveness of software optimizations by allowing usage of at least one of the plurality of registers **102** defined in the extended semantic mode (e.g., a queue behaviour, or a stack behaviour) without requiring specific management instructions. The ability of the data processing system **100** to enable, or disable, the extended semantic mode for each of the plurality of registers **102** allows for more targeted optimization by leveraging the specific functionalities of each semantic mode (e.g., potential queue-based operations in the first semantic mode, stack-based operations with destructive writes in the second semantic mode) depending on the specific needs of different data structures and/or algorithms. Such an implementation improves the performance of the data processing system **100** in comparison to any conventional system with a single, fixed mode for all registers.

Throughout the present disclosure, the term "*register*" as used herein refers to memory units located within the data processing system **100** according to one of the plurality of semantic modes. The plurality of registers **102** are operable to hold data and/or instructions currently being used by the data processing system **100** and act as a working memory for the data processing system **100** to facilitate efficient execution of instructions. It will be appreciated that the number of the plurality of registers **102** may be varied as per the implementation without any limitations to the present disclosure. In an example, the number of the plurality of registers **102** may be at least one of 8, 16, 32, 64, 128 registers. Typically, each register **R1**, **R2**, up to **Rn**, of the plurality of registers **102**, comprises multiple storage locations for storing data therein. The term "*storage location*" as used herein refers to specific slots or compartments within each of the plurality of registers, wherein the number of storage locations in each register **R1**, **R2**, up to **Rn**, may vary depending upon the implementation. In one or more embodiments, the plurality of registers **102** comprises at least one of integer registers, floating point registers and/or vector registers. In another embodiment, the plurality of registers **102** comprises at least one of a general-purpose register, an accumulator, an address register, a program counter, a stack pointer, a special purpose register. Beneficially, the data processing system **100** leverages the plurality of registers **102** to provide high-speed memory units operable to hold frequently accessed data in order to improve the efficiency of the data processing system **100.** Optionally, the plurality of registers **102** comprises one or more configuration registers to control the semantic mode of each register **R1**, **R2**, up to **Rn** of the plurality of registers **102** individually to provide centralized management via the data processing system **100.**

Typically, each register **R1**, **R2**, up to **Rn** of the plurality of registers **102** can operate under different semantic modes, essentially defining the behaviour and interpretation of instructions. Alternatively stated, the data processing system **100** handles instructions based on one of the plurality of semantic modes for a given register of the plurality of registers **102**, wherein instructions themselves may contain information specifying one of the plurality of semantic modes for directing the data flow and operations based on the semantic mode of each register **R1**, **R2**, up to **Rn.** Beneficially, such an implementation improves the flexibility, security, and performance of the data processing system **100.** It will be appreciated that the specific type of the plurality of semantic modes and corresponding functionalities would depend on the design and intended use of the data processing system **100.**

As shown, each register **R1**, **R2**, up to **Rn**, of the plurality of registers **102** has one or more storage locations organised according to one of the plurality of semantic modes, including the first semantic mode and the second semantic mode. The term "*semantic mode*" as used herein refers to a special configuration for each register **R1**, **R2**, up to **Rn** of the plurality of registers **102** configured to alter the behaviour and interpretation of instructions and essentially acts as a "switch" controlling the data handling and operations of the data processing system **100.** It will be appreciated that the specific types of register of the plurality of registers **102** and their functionalities vary depending the intended use and the processing architecture associated with the data processing system **100.** Typically, once a given register of the plurality of registers **102** is configured to work with an extended semantics, the data processing system **100** implicitly enforces the semantics whenever instructions i.e., write to, or read from, are received. For example, if register **R1** is configured in queue mode with a single consumer, any instruction that writes to **R1** will perform a push operation to the tail of a FIFO queue and any instruction that reads from **R1** will retrieve the value at the head of the queue and pop this value from the queue. Additionally, the data processing system **100** is extended to define the specific extended semantics that are supported and their behaviour, as well as the behaviour in case of exceptional events such as, reading from an empty queue, or what happens if a program writes more than the supported maximum number of elements in any queue.

In one or more embodiments, the first semantic mode is a queue based semantic mode where a write instruction destined for the corresponding register of the plurality of registers **102** is interpreted as an enqueue operation which pushes data to a tail of a queue, and a read instruction destined for the corresponding register is interpreted as a dequeue operation to retrieve data from a head of a queue. The data processing system **100** is extended with a custom FIFO queue mode, wherein each of the plurality of registers **102** can be configured to operate as a first-in-first-out queue. The semantics of the queue is that of a single-producer, single-consumer FIFO queue. An instruction that writes to one of the plurality of registers configured to operate in queue mode implicitly performs a push operation at the tail of a queue (instead of a destructive write) and an instruction that reads from one of the plurality of registers configured in queue mode implicitly performs a pop operation from the head of the queue. In operation, when the corresponding register, or the enabled register, or the disabled register of the plurality of registers **102** operates in the first semantic mode, the corresponding register operates like a queue i.e., First In, First Out (FIFO) mechanism. Specifically, the write instruction (or enqueue) is operable for adding data to the corresponding register, similar to an "enqueue" operation, wherein the data (or value) is placed at the tail (or end) of the queue. Similarly, the read instruction (or dequeue) is operable for retrieving data from the corresponding register, similar to a "dequeue" operation, wherein the data at the head (or front) of the queue is retrieved and removed therefrom. Beneficially, such an implementation of the first semantic mode enables accurate and ordered data retrieval and streamlines data processing tasks in order to improve the efficiency of the data processing system **100.**

In another embodiment, the first semantic mode is a stack based semantic mode where a write instruction destined for the corresponding register of the plurality of registers **102** is interpreted as a push operation which pushes data to a top position of a stack and a read instruction destined for the corresponding register is interpreted as a pop operation which retrieves data from the top position of a stack. In this embodiment, instructions writing to a register configured in stack mode perform a push to a stack structure and instructions reading from the register perform a pop from the stack (thus retrieving and removing the latest-written value), wherein the stack semantic mode can also define a number of consumers and only execute pop operation from the stack when the counter associated with element at the top of the stack reaches zero. In operation, when the corresponding register, or the enabled register, or the disabled register, of the plurality of registers **102** operates in the first semantic mode, the corresponding register operates like a stack i.e., Last In, First Out (LIFO) mechanism. Specifically, the write instruction (or enqueue) is operable for adding data to the given register, similar to a "push" operation, wherein the data (or value) is placed at the top (or head) of the stack. Similarly, the read instruction (or dequeue) is operable for retrieving data from the given register, similar to a "pop" operation, wherein the data at the head (or top) of the stack is retrieved and removed therefrom. Beneficially, such an implementation of the first semantic mode enables simplified access to the latest data without requiring management of the entire data history within the corresponding register of the plurality of registers **102.**

According to the second semantic mode, which can be considered the "normal" mode where extended semantics are not used, a write instruction destined for the corresponding register of the plurality of registers **102** is interpreted as a destructive write operation which replaces existing data with new data, according to the second semantic mode. In this case, the extended semantic mode is disabled using the control interface.

Typically, the corresponding register functions like a stack i.e., Last In, First Out (LIFO), wherein the writing (or push) operation places the data (or value) at the top of the corresponding register and simultaneously overwrites the existing data. Optionally, correspondingly, the reading operation (or pop) retrieves the data (or value) from the top of the corresponding register and removes the data therefrom. The control interface **104** allows definition of a number of consumers i.e., greater than one. For example, if one of the plurality of registers **102** is configured in queue mode with N consumers, then each element written to that register is associated with a counter that initially is set to `N'. Herein, any instruction that reads from the corresponding register will retrieve the value at the head of the queue and decrement the associated counter. Correspondingly, if the counter reaches zero, then the element at the head of the queue will also be removed (i.e., a pop operation is only performed once the counter associated with the element at the head of the queue reaches zero). Beneficially, implementation of the semantic modes in the data processing system **100** potentially offloads processing overhead from associated software(s) and improves the performance thereof.

Further, as shown, the data processing system **100** further comprises a control interface **104** configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode.

Throughout the present disclosure, the term "*control interface*" as used herein refers to a component of the data processing system **100** operable to manage and/or control the functionality of each of the plurality of registers **102.** The control interface **104** enables individual control over the extended semantic mode functionality for each register **R1**, **R2**, up to **Rn**, of the plurality of registers **102** operable to be enabled (i.e., switched "ON") or disabled (i.e., switched "OFF") based on the needs of the implementation. In an embodiment, the control interface **104** is implemented using a Memory-Mapped Control Register (MMCR) accessible by the data processing system **100** via memory addresses. The MMCR includes dedicated bits, wherein each bit corresponds to one of the plurality of registers **102.** The value of each bit (0 or 1) determines whether the corresponding register operates in the extended semantic mode (enabled) or not.

Herein, the control interface **104** allows usage of one or more of the plurality of registers **102** in the extended semantic mode that defines the extended semantics (e.g., behaving like a queue or a stack) without requiring specific management instructions. In operation, when the extended semantic mode functionality is enabled for a given register of the plurality of registers **102**, the control interface **104** ensures that the corresponding register interprets instructions based on the functionalities defined for the first semantic mode. Correspondingly, when the extended mode functionality is disabled for a given register, the control interface **104** ensures that the corresponding register interprets instructions according to the second semantic mode. Thus, once the extended semantics mode functionality is enabled for the corresponding register, the extended semantics will be implicitly enforced until it is disabled (through the same control interface **104**). For example, if a single-consumer queue mode (FIFO) is enabled for a register **R1**, then any instruction writing to **R1** will implicitly perform a push operation to the tail of a FIFO queue, while any instruction reading from **R1** will implicitly perform a pop operation from the FIFO queue.

The control interface **104** acts as a central authority, managing or coordinating the operational semantic mode for each register **R1**, **R2**, up to **Rn** of the plurality of registers **102** and ensuring accurate interpretation of instructions based on the active (or current) semantic mode to enable the data processing system **100** to leverage the unique functionalities of each semantic mode (e.g., queue-based vs. stack-based) for the corresponding register based on the implementational needs to improve the efficiency and flexibility of the data processing system **100.** Beneficially, the extended semantic mode ability enabled via the control interface **104** of the data processing system **100** addresses the problem of the limited number of available architectural registers in ISAs, which conventionally limits the effectiveness of software optimizations.

Proposals to address this problem exist, but they introduce additional management instructions that require ISA encoding space and increase code size, thus generating runtime overhead. Instead, the data processing system **100** of the present disclosure allows the plurality of registers **102** to be implemented in the extended semantic mode that defines an extended semantics (e.g., behaving like a queue or a stack) without requiring specific management instructions. Additionally, optionally, the control interface **104** may be configured via one or more instructions and/or dedicated control signals, allowing dynamic management of the semantic mode(s) of each register **R1**, **R2**, up to **Rn** during execution.

In one or more embodiments, the control interface **104** is implemented by a memory mapped control register. The "*memory mapped control register*" (MMCR) refers to a type of register, implemented within the data processing system **100** to control the extended semantic mode functionality for the plurality of registers **102.** In an example, the MMCR contains dedicated bits, wherein each bit corresponds to one of the plurality of registers **102** in the data processing system **100.** The value (0 or 1) of each bit determines the mode for the corresponding register of the plurality of registers **102**, wherein when the value is '1' (enabled), the corresponding register operates in the extended semantic mode and whereas when the value is '0' (disabled), the corresponding register operates in a standard mode. Alternatively, the encoding can be done differently where: '0' means normal mode, ` 1' means the first extended mode and '2' means the second extended mode, etc. Here, the number of bits in the control registers are: sup(log2(number_of_supported_extended_modes)). If encoding is done with one bit per extended mode, and each bit means "disable / enable", the additional constraint applies where only one of the bits can be 1 at any time.

In operation, the data processing system **100** interacts with the MMCR via memory access instructions i.e., read and write operations. Specifically, while reading, the data processing system **100** reads the data (or value) of the MMCR to determine the current semantic mode for the corresponding register of the plurality of registers **102** and whereas, while writing, the data processing system **100** writes specific values to the MMCR to control or modify the current semantic mode depending upon the implementation. Beneficially, utilizing memory access mechanisms simplifies the communication between the data processing system **100** and the control interface **100**, and simultaneously enables dynamic modification of the extended semantic mode functionality of each of the plurality of registers **102.**

In one or more embodiments, the extended semantic mode functionality is defined in an Instruction Set Architecture of a processing unit of the data processing system **100**, and wherein the control interface **104** is configured to selectively enable or disable an extended semantic mode functionality according to the Instruction Set Architecture. Herein, the extended semantic mode functionalities (for example, queue-based and stack-based, with or without destructive write operations) are defined within the ISA of the processing unit of the data processing system **100.** The ISA documents the behaviour i.e., what happens when an instruction writes to, or reads from, a given register of the plurality of registers configured with the extended semantics and switching mechanism of the extended semantics via the control interface **104.** The "*processing unit*" refers to the micro-architecture of the data processing system **100.** The processing unit may be configured to implement the extended semantic mode functionality in multiple manners. In an example, an out-of-order processing unit may extend its register renaming capability with the ability to manage the extended semantics mode functionality and utilize one or more registers of the plurality of registers **102** to store values. Alternatively, the out-of-order processing unit may comprise dedicated storage locations for the values written to the one or more registers of the plurality of registers **102** with enabled extended semantics mode functionality. In another example, an in-order processing unit may introduce additional microarchitecture(s) and storage locations to manage values written to the one or more registers of the plurality of registers **102** configured with the extended semantics. Thus, regardless of the implementation, once a register of the plurality of registers **102** is configured with the extended semantic mode, the processing unit of the data processing system **100** automatically enforces the extended semantics mode functionality whenever instructions interact with the corresponding register of the plurality of registers **102.** For example, if a register **R1** of the plurality of registers **102** is configured in the first semantic mode (queue mode) with a single consumer, then any instruction that writes to the register **R1** will implicitly perform a push operation to the tail of a FIFO queue, and any instruction that reads from the register **R1** will retrieve the value at the head of the queue and thereby pop the read value from the queue. Beneficially, such a definition of the extended mode functionality ensures consistency and compatibility while potentially allowing dynamic switching of the extended semantic mode functionality based on the implementation, such as, during program execution, to provide finer-grained control over the behaviour of the plurality of registers **102.** Optionally, the data processing system **100** may utilize a set of instructions for switching (enabling or disabling) or utilizing the extended semantic mode functionality based on which the control interface **104** is configured to selectively enable or disable the extended semantic mode functionality.

FIG. 2 illustrates a flowchart listing steps involved in a method **200** carried out by the data processing system **100**, in accordance with one or more embodiments of the present disclosure. It will be appreciated that FIG. 2 is described in conjunction with the elements of the data processing system **100** of FIG 1. The method **200** illustrated via the flowchart includes steps **202** and **204.**

In operation, at a step **202**, the method **200** comprises enabling, by the control interface **104**, the extended semantic mode functionality for a register of the plurality of registers **102.** Herein, the control interface **104** allows usage of one or more of the plurality registers **102** in the extended semantic mode that defines the extended semantics (e.g., behaving like a queue or a stack) without requiring specific management instructions.

And, at a step **204**, the method **200** further comprises interpreting a received write and/or read instruction according to the first semantic mode. Typically, when the extended semantic mode functionality is enabled for a given register of the plurality of registers **102**, the control interface **104** ensures that the corresponding register interprets instructions based on the functionalities defined for the first semantic mode. Correspondingly, when the extended mode functionality is disabled for the given register, the control interface **104** ensures that the corresponding register interprets instructions according to the second semantic mode. Thus, once the extended semantics mode functionality is enabled for the corresponding register, the extended semantics will be implicitly enforced until it is disabled (through the same control interface **104**).

Steps **202** and **204** are only illustrative, and other alternatives can also be provided where one or more steps are added, one or more steps are removed, or one or more steps are provided in a different sequence without departing from the scope of the claims herein.

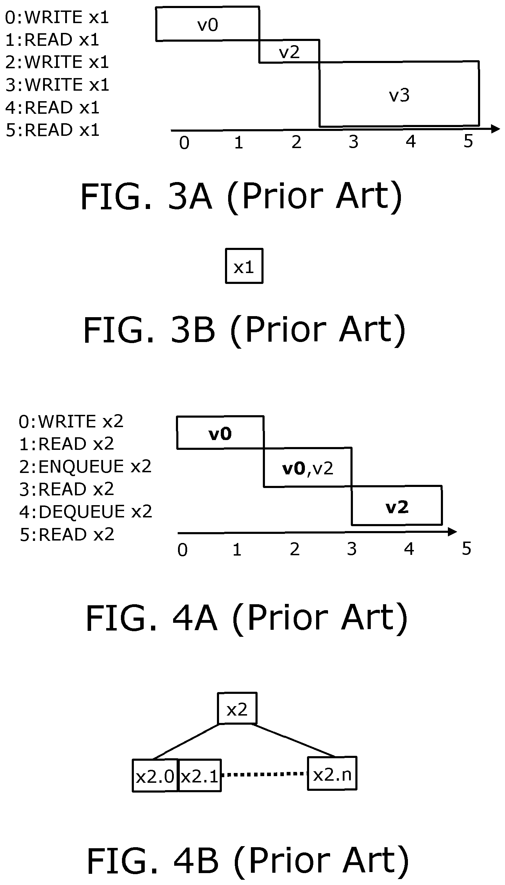

FIGs. 3A and 3B (Prior Art) illustrate an exemplary depiction of the values stored in a conventional register x1 as a sequence of six instructions is executed. Current Instruction Set Architectures (ISAs) typically offer architectural registers with the characteristic of destructive writes i.e., each write instruction overwrites the existing value in the register, regardless of whether it was previously read or not.

FIG. 3A depicts the evolution of the value stored in register x1 as each instruction of the sequence of six instructions (labelled in program order from 0 to 5) that interact with the register x1 are executed (shown from left to right on the horizontal axis), wherein each instruction is operable to either write to, or read from, the register x1. Herein, the values are represented as 'vn', wherein 'n' is the index and is same as the write instruction that produced the given value. The write instruction (or operation) overwrites the value in x1 and the read instruction retrieves the latest-written value. As shown, instructions 4 and 5 read the same value v3, written by instruction 3, and the value written by instruction 2 is never read and is therefore lost. FIG. 3B illustrates a single value capable of being stored in the register x1.

FIGs. 4A and 4B (Prior Art) illustrate an exemplary depiction of the values stored in another conventional register x2 as a sequence of six instructions is executed.

FIG. 4A illustrates the evolution of the value stored in register x2 as each instruction of the sequence of six instructions (labelled in program order from 0 to 5) that interact with the register x2 are executed (shown from left to right on the horizontal axis), wherein each instruction is operable to either write to, or read from, the register x2. As shown, the register x2 is implemented as an exemplary queue having several storage locations that allow storage of multiple values simultaneously. In order to store multiple values in x2, a new ENQUEUE operation is defined, which performs a push operation, i.e., it adds a value to the tail of the queue without removing existing values. Herein, the read operations on x2 will retrieve the value at the head of the queue (shown in bold). Further, in order to access values past the head of the queue, a new DEQUEUE operation is defined, which performs a pop operation, i.e., the pop operation removes one value from the head of the queue. In the example, the DEQUEUE allows instruction 5 to read the value v2.

The disadvantage of the prior art is that explicit management of the queue (or stack) register(s) requires addition of new instructions, which are required to be encoded in the ISA and are needed to be added to the assembly code. However, such additional management instructions introduce overhead and reduce the benefits of the new register semantics. To overcome the aforementioned problems, several proposals or solutions have been made or offered. However, prior proposals are based on having explicit management instructions for the new abstractions (e.g., queue or stack) or require additional registers.

Thus, in order to overcome the aforementioned problems while eliminating the need for additional management instructions for the new abstractions, the present disclosure allows usage of certain architectural registers defined in the data processing system **100** in the extended semantic mode that defines an extended semantics (e.g., behaving like a queue or a stack) without requiring specific management instructions. This data processing system **100** of the present disclosure is potentially applicable to any system that includes a central processing unit (CPU), or a product thereof, which executes code from an ISA that defines architectural registers. Examples include mobile devices, wearables, servers, embedded systems, base stations, and the like. Moreover, notably, the data processing system **100** is particularly relevant for systems with stringent performance or efficiency requirements, since it improves the effectiveness of compiler-based code optimization techniques such as, but not limited to, software pipelining, loop unrolling, code hoisting, and decoupling.

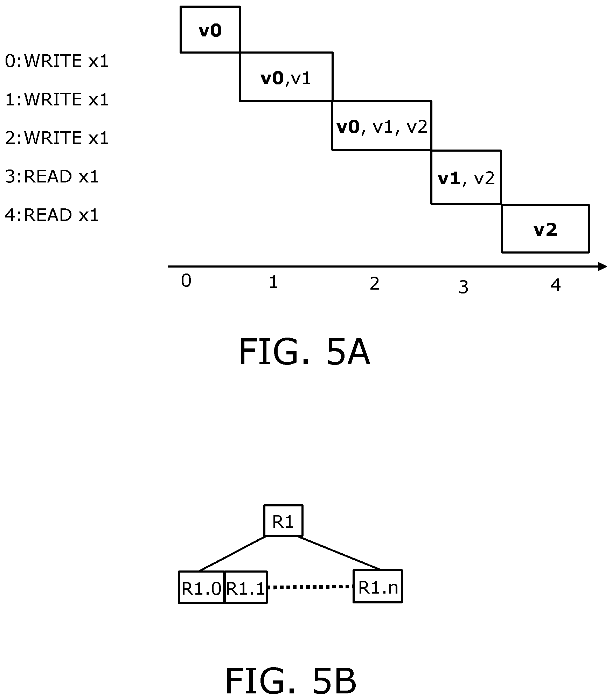

FIGs. 5A and 5B illustrate an exemplary depiction of the value stored in a register **R1** of the plurality of registers **102** as each instruction of a sequence of five instructions (labelled from 0 to 4) that interact with the register **R1** is executed (shown from left to right on the horizontal axis), in accordance with one or more embodiments of the present disclosure. Herein, the values are represented as 'vn', wherein 'n' is the index and is same as the write instruction that produced the given value. As shown, illustrated is the behaviour of the register **R1** of the plurality of registers 102, assuming FIFO configuration mode. Herein, each instruction is operable to either write to, or read from, the register **R1.** Notably, in contrast to conventional solutions that have explicit ENQUEUE and DEQUEUE operations, the existing WRITE and/or READ operations acquire a new behaviour when they target the FIFO register **R1.** Specifically, a WRITE operation enqueues a value, while a read operation reads and dequeues the value at the head of the queue (shown in bold).

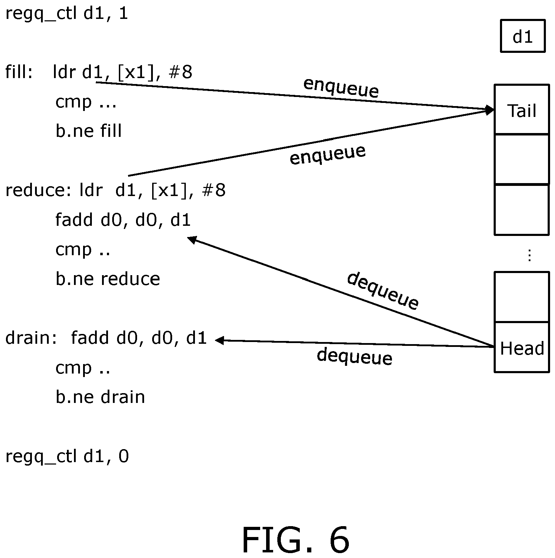

FIG. 6 illustrates an exemplary depiction of the extended semantic mode being implemented on a register **d1** of the plurality of registers **102**, in accordance with one or more embodiments of the present disclosure. It will be appreciated that the register **d1** (source register or destination register) is similar to the register(s) of the plurality of registers **102.** As shown, an instruction that writes to the register **d1** configured to operate in the extended semantic mode (or queue mode) implicitly performs an enqueue operation at the tail of a queue (instead of a destructive write) and an instruction that reads from the register **d1** configured in the extended semantic mode implicitly performs a dequeue operation from the head of the queue. The register **d1** queues concisely to connect value producers to consumers (by changing semantics of existing register interface). The register **d1** establishes direct connections between value producers and consumers to streamline data flow. Moreover, with a single producer and consumer assumed, enqueuing and dequeuing data happen implicitly, simplifying the flow of instructions. The queue introduces a separation (queue length) between producer and consumer, enabling increased Instruction Level Parallelism (ILP). Thus, the data processing system **100** can potentially execute other instructions while the producer or consumer interacts with the queue, thereby improving the overall efficiency thereof.

There is provided a computer program comprising instructions that, when executed by a computer system, cause the computer system to implement the method **200.** For example, the instructions are implemented on the computer-readable media, which include, but are not limited to, Electrically Erasable Programmable Read-Only Memory (EEPROM), Random Access Memory (RAM), Read-Only Memory (ROM), Hard Disk Drive (HDD), Flash memory, a Secure Digital (SD) card, Solid-State Drive (SSD), a computer-readable storage medium, and/or CPU cache memory. In an example, the instructions are generated by a computer program, which implements the given method **200** carried out by the data processing system **100.**

Modifications to embodiments of the present disclosure described in the foregoing are possible without departing from the scope of the present disclosure as defined by the accompanying claims. Expressions such as "including", "comprising", "incorporating", "have", and "is" used to describe, and claim the present disclosure are intended to be construed in a non-exclusive manner, namely allowing for items, components, or elements not explicitly described also to be present. Reference to the singular is also to be construed to relate to the plural. The word "exemplary" is used herein to mean "serving as an example, instance, or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A data processing system (100) comprising:
a plurality of registers (102), wherein each register (R1, R2, up to Rn) has one or more storage locations organised according to one of a plurality of semantic modes, including a first semantic mode and a second semantic mode; and
a control interface (104) configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode.

2. The system (100) of claim 1, wherein the first semantic mode is a queue based semantic mode where a write instruction destined for the corresponding register of the plurality of registers (102) is interpreted as an enqueue operation which pushes data to a tail of a queue, and a read instruction destined for the corresponding register is interpreted as a dequeue operation to retrieve data from a head of a queue.

3. The system (100) of claim 1, wherein the first semantic mode is a stack based semantic mode where a write instruction destined for the corresponding register of the plurality of registers (102) is interpreted as a push operation which pushes data to a top position of a stack and a read instruction destined for the corresponding register is interpreted as a pop operation which retrieves data from the top position of a stack.

4. The system (100) of any of claims 1-3, wherein a write instruction destined for the corresponding register of the plurality of registers (102) is interpreted as a destructive write operation which replaces existing data with new data, according to the second semantic mode.

5. The system (100) of any of claims 1-4, wherein the plurality of registers (102) comprises at least one of integer registers, floating point registers and/or vector registers.

6. The system (100) of any of claims 1-5, wherein the extended semantic mode functionality is defined in an Instruction Set Architecture of a processing unit of the data processing system, and wherein the control interface (104) is configured to selectively enable or disable an extended semantic mode functionality according to the Instruction Set Architecture.

7. The system (100) of any of claims 1-6, wherein the control interface (104) is implemented by a memory mapped control register.

8. A method (200) carried out by a data processing system (100) which comprises:
a plurality of registers (102), where each register (R1, R2, up to Rn) has multiple storage locations organised according to one of a plurality of semantic modes, including a first semantic mode and a second semantic mode; and
a control interface (104) configured to selectively enable or disable an extended semantic mode functionality for each of the plurality of registers, such that, when enabled, a corresponding register interprets instructions according to the first semantic mode, and when disabled, a corresponding register interprets instructions according to the second semantic mode;
the method comprising steps of:
enabling (202), by the control interface, the extended semantic mode functionality for a register of the plurality of registers; and
interpreting (204), a received write and/or read instruction according to the first semantic mode.

9. The method (200) of claim 8, wherein the first semantic mode is a queue based semantic mode where a write instruction destined for the register is interpreted as an enqueue operation which pushes data to a tail of a queue, and a read instruction destined for the register is interpreted as a dequeue operation which retrieves data from a head of a queue

10. The method (200) of claim 8, wherein the first semantic mode is a stack based semantic mode where a write instruction destined for the register is interpreted as a push operation which pushes data to a top position of a stack and a read instruction destined for the register is interpreted as a pop operation which retrieves data from the top position of a stack.

11. The method (200) of any of claim 8-10, wherein a write instruction destined for the register of the plurality of registers (102) is interpreted as a destructive write operation which replaces existing data with new data, according to the second semantic mode.

12. The method (200) of claim 8, wherein the control interface (104) is implemented by a memory mapped control register.

13. The method (200) of claim 8, wherein the plurality of registers (102) comprises at least one of integer registers, floating point registers and/or vector registers.

14. A computer program comprising instructions for carrying out all the steps of the method (200) according to any of preceding method claims 8-13, when said computer program is executed on a computer system.

15. The computer program of claim 14, wherein the computer program is stored on a computer readable storage medium.

## Amended claims

### Amended claims in accordance with Rule 137(2) EPC.

1. A data processing system (100) comprising:
a plurality of architectural registers (102), wherein each architectural register (R1, R2, up to Rn) has one or more storage locations organised according to one of a plurality of semantic modes, including a first semantic mode and a second semantic mode; and
a control interface (104) configured to selectively enable or disable an extended semantic mode functionality for each of the plurality of architectural registers, such that, when enabled, a corresponding architectural register interprets instructions according to the first semantic mode, and when disabled, a corresponding architectural register interprets instructions according to the second semantic mode.

2. The system (100) of claim 1, wherein the first semantic mode is a queue based semantic mode where a write instruction destined for the corresponding register of the plurality of architectural registers (102) is interpreted as an enqueue operation which pushes data to a tail of a queue, and a read instruction destined for the corresponding register is interpreted as a dequeue operation to retrieve data from a head of a queue.

3. The system (100) of claim 1, wherein the first semantic mode is a stack based semantic mode where a write instruction destined for the corresponding register of the plurality of architectural registers (102) is interpreted as a push operation which pushes data to a top position of a stack and a read instruction destined for the corresponding register is interpreted as a pop operation which retrieves data from the top position of a stack.

4. The system (100) of any of claims 1-3, wherein a write instruction destined for the corresponding register of the plurality of architectural registers (102) is interpreted as a destructive write operation which replaces existing data with new data, according to the second semantic mode.

5. The system (100) of any of claims 1-4, wherein the plurality of architectural registers (102) comprises at least one of integer registers, floating point registers and/or vector registers.

6. The system (100) of any of claims 1-5, wherein the extended semantic mode functionality is defined in an Instruction Set Architecture of a processing unit of the data processing system, and wherein the control interface (104) is configured to selectively enable or disable an extended semantic mode functionality according to the Instruction Set Architecture.

7. The system (100) of any of claims 1-6, wherein the control interface (104) is implemented by a memory mapped control register.

8. A method (200) carried out by a data processing system (100) which comprises:
a plurality of architectural registers (102), where each register (R1, R2, up to Rn) has multiple storage locations organised according to one of a plurality of semantic modes, including a first semantic mode and a second semantic mode; and
a control interface (104) configured to selectively enable or disable an extended semantic mode functionality for each of the plurality of architectural registers, such that, when enabled, a corresponding architectural register interprets instructions according to the first semantic mode, and when disabled, a corresponding register interprets instructions according to the second semantic mode;
the method comprising steps of:
enabling (202), by the control interface, the extended semantic mode functionality for an architectural register of the plurality of architectural registers; and
interpreting (204), a received write and/or read instruction according to the first semantic mode.

9. The method (200) of claim 8, wherein the first semantic mode is a queue based semantic mode where a write instruction destined for the register is interpreted as an enqueue operation which pushes data to a tail of a queue, and a read instruction destined for the architectural register is interpreted as a dequeue operation which retrieves data from a head of a queue.

10. The method (200) of claim 8, wherein the first semantic mode is a stack based semantic mode where a write instruction destined for the architectural register is interpreted as a push operation which pushes data to a top position of a stack and a read instruction destined for the register is interpreted as a pop operation which retrieves data from the top position of a stack.

11. The method (200) of any of claim 8-10, wherein a write instruction destined for the architectural register of the plurality of architectural registers (102) is interpreted as a destructive write operation which replaces existing data with new data, according to the second semantic mode.

12. The method (200) of claim 8, wherein the control interface (104) is implemented by a memory mapped control register.

13. The method (200) of claim 8, wherein the plurality of architectural registers (102) comprises at least one of integer registers, floating point registers and/or vector registers.

14. A computer program comprising instructions for carrying out all the steps of the method (200) according to any of preceding method claims 8-13, when said computer program is executed on a computer system.

15. The computer program of claim 14, wherein the computer program is stored on a computer readable storage medium.
